# EUROPÄISCHE PATENTSCHRIFT

(11) **EP 1 202 874 B1**
(45) Veröffentlichungstag und Bekanntmachung des Hinweises auf die Patenterteilung: **25.02.2004**
(21) Anmeldenummer: 00954582.3
(22) Anmeldetag: 02.08.2000
(51) Int. Cl.: B60R 13/08, G10K 11/16

(54) **BAUTEIL MIT HOHER ABSORPTIVER WIRKUNG ÜBER EINEM BREITEN FREQUENZBEREICH**
COMPONENT WITH HIGH ABSORBING EFFECT OVER A WIDE FREQUENCY RANGE
COMPOSANT PRESENTANT UN EFFET ABSORBANT IMPORTANT SUR UNE LARGE GAMME DE FREQUENCES

(30) Priorität: 11.08.1999 DE 19938005; 11.05.2000 DE 10022902
(43) Veröffentlichungstag der Anmeldung: 08.05.2002
(73) Patentinhaber: HP-CHEMIE PELZER RESEARCH & DEVELOPMENT Ltd., Waterford, County Waterford (IE)
(72) Erfinder: NICOLAI, Norbert, D-46514 Schermbeck (DE); FUCHS, Helmut V., Fraunhofer-Inst.für Bauphysik, 71093 Weil im Schonbach (DE); CHUONG, Dinh-Quyen, D-44145 Dortmund (DE)
(74) Vertreter: Jönsson, Hans-Peter, Dr.Dipl.-Chem.
(86) Internationale Anmeldenummer: PCT/EP2000/007459
(87) Internationale Veröffentlichungsnummer: WO 2001/012470

(56) Entgegenhaltungen:
- WO-A-00/05707
- WO-A-94/24382
- WO-A-97/27370
- DE-A- 4 137 706
- DE-C- 19 730 355
- DE-C- 19 754 107
- DE-U- 29 710 491
- US-A- 5 750 944

## Beschreibung

Gegenstand der Erfindung ist ein Verkleidungs- oder Formelement für Verkehrsmittel. Im Stand der Technik sind Absorber aus Fasermaterial bekannt, die als Vliesbauteile eingesetzt werden. Als Fasern kommen dabei neben Naturfasern polymere Fasern anorganische oder metallische Fasern zum Einsatz. Eine Bindung zu den Bauteilen erfolgt dabei durch eine Verknüpfung über die eigenen als auch Fremdfasern und/oder durch ein Bindemittel, welches polymerer oder auch anorganischer Natur sein kann.

Weiterhin sind Absorber aus offenporigen Schäumen aus polymerem, organischem wie auch anorganischen Material bekannt. Die optimale Absorptionswirkung solcher Materialien liegt in einem Frequenzbereich von 2000 - 10 000 Hz.

Aus den verschiedenen Bereichen der Technik ist der Einsatz von Helmholz-Resonatoren unterschiedlichster Abmessungen zur Dämpfung von Luftschall bekannt für den Bereich des Kraftfahrzeugbaus sei hier stellvertretend auf die Offenlegungsschriften DE 196 15 917 A, DE 196 13 875 A und DE 37 29 765 A hingewiesen. Diese Absorber sind sehr platzintensiv und für den Kraftfahrzeugbereich nur bedingt geeignet.

In der DE 197 54 107 C1 und dem hier referierten Stand der Technik, auf den voll inhaltlich Bezug genommen wird, wird das Absorptionsverhalten mikroperforierter Bauteile untersucht. In der genannten Schrift werden aus mikroperforierten Folien geschichtet aufgebaute Baffle-Strukturen untersucht, die als sogenannte Kompaktabsorber von einer Decke oder einem Dach abhängt. Die mikroperforierten Folien sind geeignet, einseitig oder beidseitig, senkrecht, schräg oder streifend auftreffende Schallwellen aus dem Raum, insbesondere bei höheren Frequenzen, sehr wirkungsvoll zu absorbieren.

Wenn man zusätzlich parallel im Abstand von einigen Zentimetern für jede mikroperforierte Folie eine weitere, nicht perforierte Folie ausspannt, verbessert sich die Absorption der akustisch wirksamen Folie nicht. Dies wird damit erklärt, dass letztere zur Entfaltung ihrer Dämpfungswirkung weder eine schallharte Rückwand, noch einen wie auch immer gestalteten Hohlraum dazwischen als Luftkissen benötigt. Ersetzt man dagegen die mikroperforierten durch ungelochte Folien des gleichen Materials, so bleibt eine nur ganz geringe Absorption übrig. Die Schallabsorption kommt bekanntermaßen bei einer Resonatoranordnung zustande, wo der Masse-Feder-Effekt zum Tragen kommt. Eine physikalische Erklärung für die Schallabsorption der mikroperforierten Folien wird von den Erfindern der genannten Druckschrift nicht für möglich gehalten.

Bekannt sind weiterhin mikrogelochte Folien und Platten, die in Abhängigkeit vom Lochdurchmesser, dem Abstand der Folie von der Wand, der Fläche die durch die Bohrungen offen ist und der Foliendicke, definierte Frequenzen ausfiltern können. In der DE 197 54 107 A ist ein solcher Schallabsorber für den Bereich von Räumen beschrieben. Hier tritt der Effekt auf, dass eine hohe Absorption nur über einen relativ engen Frequenzbereich erreicht werden kann. Eine Verbreiterung des Absorptionsbereiches ist immer mit einem beträchtlichen Verlust von Absorption verbunden um dann vollständig unwirksam zu werden.

In einer zweilagigen Anordnung, bei der zwei Folien hintereinander angeordnet sind können zwei Frequenzbereiche absorbiert werden. Dadurch ist dann eine Verbreiterung möglich ohne die im Automobilbereich notwendigen Breite zu erreichen.

Bekannt sind weiter Aufbauten, wo eine schallundurchlässige Fläche mit Lochungen versehen ist um eine absorptive Wirkung des darunterliegenden Absorbers zu erreichen, siehe beispielsweise DE 30 18 072 A, DE 41 23 593 A.

In der DE-A-4 137 706 ist ein Verkleidungsteil beschrieben Umfassend wenigstens einen microgelochten Folienabsorber, wobei die Löcher des microgelochten Folienabsorbers für die Microperforierung einen oder mehrere Durchmesser im Bereich von 0,05 bis 2 mm aufweisen und einen Luftspalt in räumlicher Abstand zu einer Schallharten Wand aufweisen.

In der DE 41 19 783 A ist ein Schalldämmelement beschrieben welches aus zwei übereinander angeordneten Lochplatten besteht, die zum Trägerelement und untereinander distanziert angeordnet sind. Zwischen den beiden Lochplatten befindet sich eine Schaumplatte. Der Lochanteil der Schall-zugewandten Seite beträgt 50 %, der der Schall-abgewandten Seite beträgt 20 % und liegt damit deutlich über die hier als notwendig angesehenen Werte.

Aufgabe der Erfindung ist die Bereitstellung eines Absorber, der über den gesamten Bereich der für die Autoindustrie interessanten Frequenzen (von 500 Hz bis 5000 Hz) absorptiv wirkt und einen geringen Bauraum bedarf.

Erfindungsgemäß wird die Aufgabe dadurch gelöst, dass ein schichtweiser Aufbau von mikrogelochten Absorbern und Vlies - und/oder Schaumstoffabsorber und/oder Luftspalt in der Art bereitgestellt wird, dass sich ein Vlies - und/oder Schaumstoffabsorber bzw. ein Hohlraum (Luftspalt) mit einer mikrogelochten Platte/Folie (mikrogelochtem Folienabsorber) abwechselt. Bevorzugt sind die Absorber so aufgebaut, dass ein oder zwei mikrogelochte Platten/Folien in Verbindung mit zwei oder drei Vlies - und/oder Schaumstoffabsorbern bzw. ein oder zwei Hohlräumen übereinander angeordnet sind.

Durch die Lochgestaltung der mikrogelochten Absorber und der Dicke der Vlies - und/oder Schaumstoffabsorber und/oder Luftspalt wird eine Kopplung beider Absorberarten erreicht. Bei der Betrachtung der Kopplung der einzelnen Absorbertypen muß unterschieden werden, weicher Typ sich in Richtung des Schalleintritts an der Oberfläche befindet.

Befindet sich ein Vlies - und/oder Schaumstoffabsorber und/oder Luftspalt an der schallzugewandten Seite so werden ab einer bestimmten Dicke die Eigenschaften des Verbundes (mikrogelochte Platte/Folie - Vlies - und/oder Schaumstoffabsorber und/oder Luftspalt) alleine durch den Vlies - und/oder Schaumstoffabsorber bestimmt. In Abhängigkeit vom verwendeten Vlies - und/oder Schaumstoffabsorber und/oder Luftspalt beträgt die Dicke 20 - 40 mm.

Mit sinkender Dicke (40 mm - 0,3 mm) des Vlies - und/oder Schaumstoffabsorbers und/oder Luftspalt wirkt der Mikrolochabsorber mit. Durch die Wahl der Dicke von Vlies - und/oder Schaumstoffabsorber und/oder Luftspalt kann die Wirkung beider Absorber aufeinander abgestimmt werden. Gleiches gilt auch bei einer nachfolgenden Lage von Mikrolochabsorber und Vlies - und/oder Schaumstoffabsorber und/oder Luftspalt bei mehrlagigen Absorbern.

Befindet sich der mikrogelochte Folienabsorber auf der schallzugewandten Seite so ist eine Kopplung beider Absorbertypen in erster Linie durch die offene Fläche zu realisieren. Mit zunehmender offener Fläche wird das Absorptionsverhalten durch den Vlies - und/oder Schaumstoffabsorber und/oder Luftspalt bestimmt. Bei einer offenen Fläche von va. 40 % erreicht der Vlies - und/oder Schaumstoffabsorber und/oder Luftspalt seine vollständige Wirkung ohne das der Mikrolochabsorber seine Wirkung vollständig verliert.

Erfindungsgemäß werden eine oder mehrere mikrogelochte Folienabsorber mit einer offenen Fläche von vorzugsweise bis zu 4 % schichtweise angeordnet. Oberflächig auf der schallzugewandten Seite und/oder zwischen den Platten bzw. zwischen Wand und dem letzten mikroperforierten Folienresonator befindet sich ein Schaumstoffund/oder Vliesabsorber oder Luft.

Je nachdem welcher Absorber die Oberfläche der schallzugewandten Seite darstellt, dessen Absorptionsverhalten dominiert das Absorptionsverhalten des Gesamtsystems.

Dabei spielt für den Fall, dass ein Schaumstoff- und/oder Vliesabsorber an der Oberfläche liegt natürlich auch die Dicke des Absorbers eine Rolle. Liegt ein Schaumstoff- und/oder Vliesabsorber, wie sie im Automobilbereich Einsatz finden, in der ersten Lage zum Schalleinfall, wird die Wirkung eines von der Schallquelle ausgehend in der zweiten Schicht liegenden mikrogelochten Folienabsorber, ab einer Dicke von ca. 7 mm des Schaumstoff- und/oder Vliesabsorbers so stark verringert, dass seine Wirkung kaum noch nachweisbar ist. Es dominiert das Eigenschaftsbild des Schaumstoff-/Vliesabsorbers.

Liegt auf der anderen Seite der mikrogelochte Folienabsorber an der Oberfläche der schallzugewandten Seite so dominiert dieser das Eigenschaftsbild des Gesamtsystems. Die Wirkung des Schäumstoffund/oder Vliesabsorbers und/oder Luftspalts ist ausgesprochen gering und sein Einsatz hat keine praktische Bedeutung.

Durch das Einbringen von zusätzlichen offenen Flächen in die mikrogelochte Folienabsorber, findet, wenn der mikrogelochte Folienabsorber vor dem Schaumstoff- und/oder Vliesabsorber und/oder Luftspalt von der Schallquelle aus gesehen liegt, eine Kopplung von mikrogelochtem Folienabsorber und Schaumstoff- und/oder Vliesabsorber und/oder Luftspalt statt.

Wird die offene Fläche alleine dadurch vergrößert, dass bei gleichen Lochdurchmesser die Anzahl der Löcher vergrößert wird, d.h. der Lochabstand verringert sich, so ändern sich die Eigenschaften des Gesamtsystems in dem Maße, wie sich die Eigenschaften des mikrogelochten Folienabsorbers ändern, d.h. nach Durchlaufen eines Maximums sinkt die Wirkung stark ab.

Wird jedoch die offene Fläche im mikrogelochte Folienabsorber dadurch vergrößert, dass zusätzliche Löcher mit einer Fläche von (6 mm² - 40 000 mm²) eingebracht werden (Makrolochung), die für den gegebenen Aufbau des mikrogelochte Folienabsorbers alleine (Wandabstand, Foliendicke, Lochabstand) keine Absorptionswirkung zeigen, so findet eine Ankopplung zum Schaumstoff- und/oder Vliesabsorber statt.

Entgegen den Erwartungen wurden keine einfache Überlagerung beider Effekte in der Art gegeben, dass der eine Effekt zunimmt und der andere abnimmt. Vielmehr kommt es zu einer Verschiebung der maximalen Absorption in einen anderen Frequenzbereich bzw. es können zwei getrennte Absorptionsmaxima aufgebaut werden.

Wichtig ist in diesem Zusammenhang das durch diese Kopplung beider Absorber der für das menschliche Ohr hörbare Frequenzbereich abgedeckt werden kann, wie er bei gegebenen Wandabstand (10 - 20 mm) durch eine mikrogelochten Folienabsorber oder einen Schaumstoff-/Vliesabsorber alleine nie erreicht werden kann.

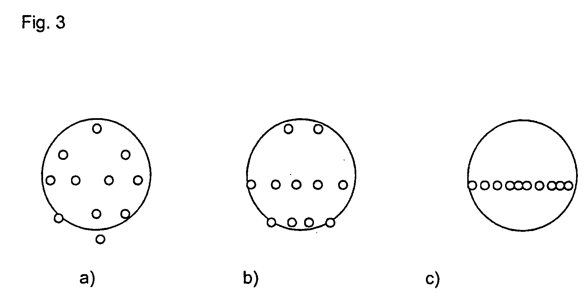

Von Bedeutung ist in diesen Zusammenhang, dass bei einer mittleren Konzentration der Löcher für die Mikrolochung, die Anordnung die Löcher auf der Gesamtfläche des Bauteils das Absorptionsverhältnis nicht mit bestimmt, wie dies in Fig. 3 dargestellt wird.

In der Fig. 3a) bis c) weisen die Bauteile gleiche Lochdurchmesser und die gleiche offene Fläche auf. Sie liefern für Messungen im Kundtschen Rohr nahezu das gleiche Absorptionsmaximum bei gleicher Frequenz.

Zum einem kann man diese Lochung gezielt für das Design, speziell in diesen Bereichen, nutzen, die im Sichtbereich, so beispielsweise im Innenraum, liegen.

Zum anderen können die Bereiche des mikrogelochten Folienabsorbers die nur Mikrolochung besitzen (keine Makrolochung) flächenmäßig so erhöht werden, dass eine Wirkung entsteht als würde keine Makrolochung vorliegen (hoher Wirkungsgrad). Die Makrolochung liefert dann noch die Wirkung des Schaumstoff- und/oder Vliesabsorbers.

Die Wirkung des mikrogelochten Folienabsorbers wird bei gleicher offener Fläche durch die Gestaltung der offenen Fläche bestimmt.

Wird eine Vergrößerung der offenen Fläche durch eine Erhöhung der Anzahl der Mikrolöcher erreicht, ist die Wirkung beider Absorbertypen für jede offene Fläche optimal.

Die Herstellung solcher mikrogelochter Folienabsorber ist jedoch aufwendig, so dass auch eine Vergrößerung der offenen Fläche durch eine Vergrößerung der Löcher bis hin zu einem streifenförmigen Aufbau von Mikrolochabsorber und Vlies - und/oder Schaumabsorber nebeneinander angewendet werden kann. Die Größe der offenen Flächen liegt im Bereich von 6 bis 40000 mm².

Zur Erreichung einer räumlich homogenen Absorption darf die zusammenhängende offene Fläche einen Wert von 40000 mm² nicht überschreiten.

Im Nachfolgenden sind einige typische Aufbauten, wie sie in Automobilbereich Anwendung finden, dargestellt.

Die erfindungsgemäßen Verkleidungs- oder Formelemente sind geeignet, bisher im Stand der Technik verwendete nicht schallabsorbierende Verkleidungs- oder Formelemente im Fahrzeugbereich durch schallabsorbierende Verkleidungs- oder Formelemente zu ersetzen. Darüber hinaus erlaubt die vorliegende Erfindung die Gestaltung neuer, bisher im Stand der Technik nicht vorhandener Elemente im Fahrzeugbereich.

Besonders bevorzugte Verkleidungs- oder Formelemente im Sinne der vorliegenden Erfindung umfassen beispielsweise Radhäuser, Motorhauben, Motorhaubenverkleidungen, Motorverkapselungen, Wärmeleitbleche, Fahrzeugschutzschilde, Getriebetunnelverkleidungen, Armaturenbretter, Fahrzeugsitze, Rückenlehnen, Armlehnen, Lenkräder, Bodenbeläge, insbesondere Teppichböden, Dachhimmel, Säulenverkleidungen, Türverkleidungen, Fahrgastraumauskleidungen, Gepäckablagen, Hutablagen, Hitzeschilder und/oder Kofferraumauskleidungen.

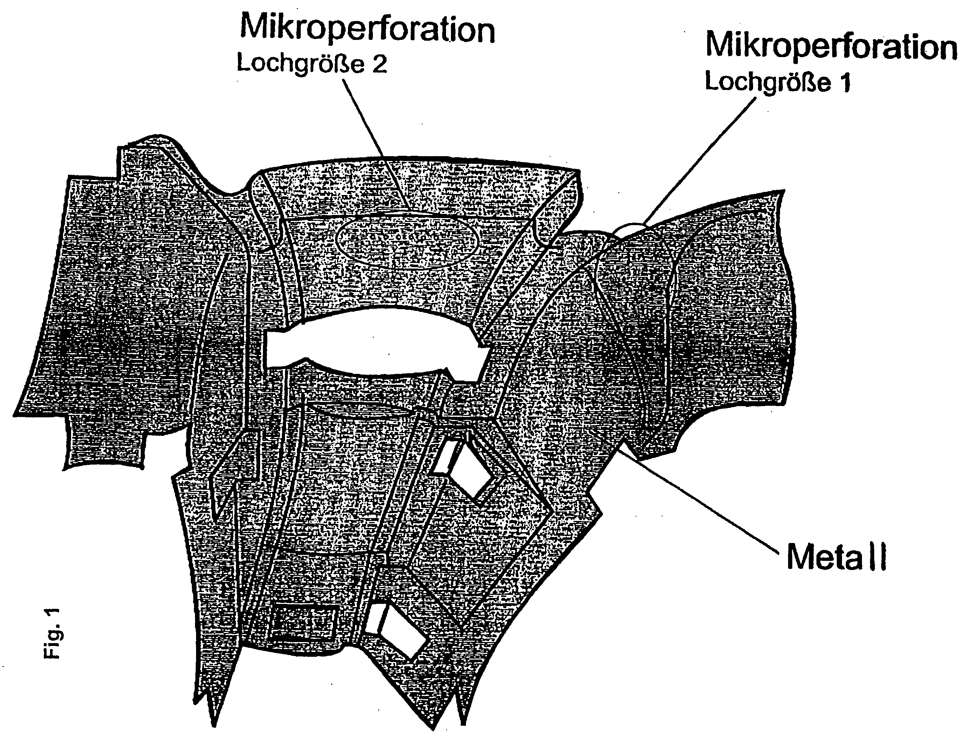

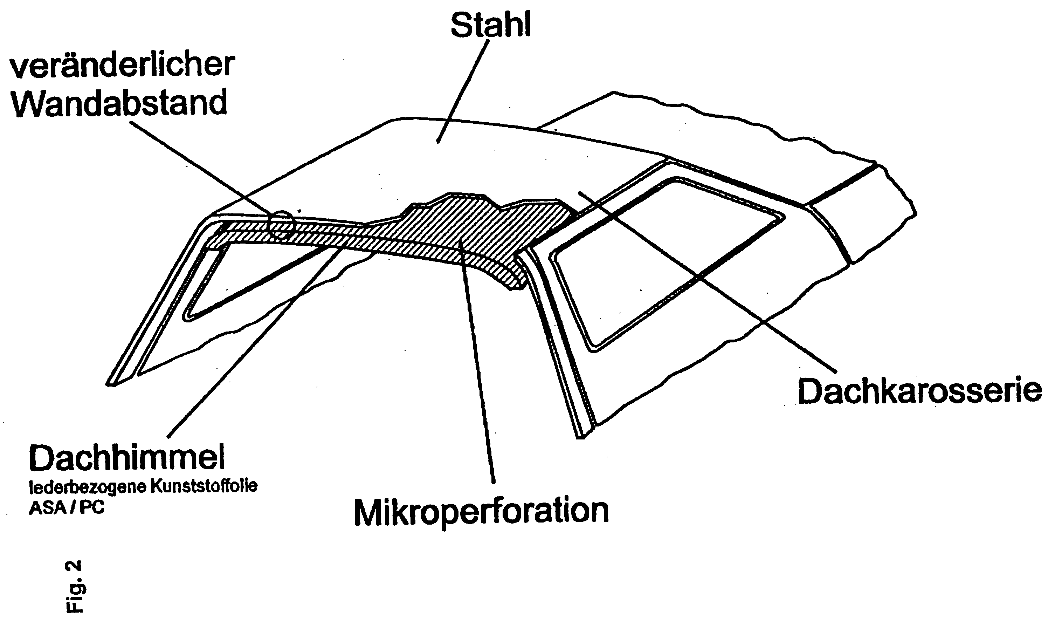

In der Fig. 1 ist eine Getriebetunnelverkleidung dargestellt, die unterschiedliche Lochgrößen in dem mikrogelochten Folienabsorber umfasst. Die Fig. 2 zeigt einen Dachhimmel, der mit Hilfe der vorliegenden Erfindung gestaltet ist.

Mit Hilfe der vorliegenden Erfindung ist es somit möglich, Verkleidungs- oder Formelemente für Verkehrsmittel zur Verfügung zu stellen, die nicht nur einen mikrogelochten Folienabsorber im Abstand zur schallharten Wand aufweisen, sondern darüber hinaus mehrere mikrogelochte Folienabsorber übereinander, die jeweils mit einem gewissen Abstand zueinander angeordnet sind.

Die schalltechnischen Eigenschaften der erfinderungsgemäßen Verkleidungs- oder Formelemente im Fahrzeugbereich werden im wesentlichen durch die Anzahl der mikroperforierten Folienabsorber, den Lochflächenanteil, die Lochabstände und den Lochdurchmessern bestimmt.

Besonders bevorzugt im Sinne der vorliegenden Erfindung sind daher Verkleidungs- oder Formelemente im Fahrzeugbereich, die dadurch gekennzeichnet sind, dass der mikrogelochten Folienabsorber einen Lochflächenanteil mit Mikrolochung von 0,2 bis 4 %, insbesondere 0,3 bis 2 %, bezogen auf die Fläche des mikrogelochten Folienabsorbers aufweist. Hierbei ist es selbstverständlich möglich, diese jeweils mit einem unterschiedlichen oder gleichen Lochflächenanteil auszugestalten. Die Löcher können nach an sich im Stand der Technik bekannten Verfahren, beispielsweise durch Stanzen oder Laserbestrahlung mit beliebiger Geometrie in den mikrogelochten Folienabsorber eingebracht werden.

Wird der Lochflächenanteil zu gering gewählt, so ist eine schallabsorbierende Wirkung nicht oder nicht in ausreichendem Maße vorhanden, während andererseits bei einem zu hoch gewählten Lochflächenanteil die schallabsorbierende Wirkung wieder nachlässt.

Vorzugsweise umfassen die erfindungsgemäßen Verkleidungs- oder Formelemente im Fahrzeugbereich Löcher in einem mikrogelochten Folienabsorber mit einem oder mehreren Durchmessern im Bereich von 0,05 mm bis 2 mm, insbesondere 0,01 mm bis 0,8 mm und einen oder mehrere Lochabstände in dem Folienabsorber im Bereich von 1 mm bis 3 mm, insbesondere 2 mm bis 20 mm.

Die Lochgrößen und Lochabstände in einem zweiten oder weiteren nachfolgenden mikrogelochten Folienabsorbern liegen in der gleichen Größenordnung wie in dem ersten mikrogelochten Folienabsorber, unterscheiden sich jedoch in der absoluten Größe.

So ist es beispielsweise möglich, sämtliche gängigen Bauteile des Innenraums von Verkehrsmitteln, insbesondere solche, die vor Hohlräumen angeordnet sind, in der mikroperforierten Bauweise auszubilden. Beispielsweise mittels Laserbestrahlung lassen sich irreversible Löcher in sämtlichen bekannten Materialien herstellen.

Um schallabsorbierend wirken zu können, ist es im Sinne der vorliegenden Erfindung bevorzugt, die Löcher im entfernteren Sichtbereich, beispielsweise im Fahrzeughimmel oder der Hutablage im Kraftfahrzeug, dem Himmel oder der Handgepäckablage im Flugzeug mit einem größeren Durchmesser, beispielsweise im Bereich von 0,5 mm bis 2 mm auszustatten. Im Nahbereich, der optisch besonders wahrgenommen wird, ist es im Sinne der vorliegenden Erfindung bevorzugt, Löcher mit einem Durchmesser von 0,05 bis 0,5 mm bereitzustellen. Bei Löchern mit Durchmessern im Bereich von 0,3 bis 0,1 mm Durchmesser nimmt der Betrachter die Löcher in der Oberfläche optisch nicht mehr wahr oder hält sie für eine Strukturierung. So können beispielsweise Fahrzeugsitze, Rückenlehnen, Armlehnen, Seitenteile der Sitze, Armaturenbrett- und Seiten- und Türverkleidungen mikroperforierte Oberflächen im Sinne der vorliegenden Erfindung aufweisen.

Im Motorraum sind viele Teile vor Hohlräumen angeordnet, wobei die Hohlräume nicht abgeschlossen sein müssen. Die Hitzeschilde über den Abgasskrümmern und anderen heißen Teilen des Motors können ebenfalls mikrogelocht ausgebildet sein. Ebenso ist es möglich, praktisch die gesamte Innenverkleidung des Motorraums, wie Motorverkapselungen oder Motorhaubenverkleidungen in der mikroperforierten Bauweise auszustatten. Werden Oberflächen des Fahrzeugs oder des Motors direkt im Sinne der vorliegenden Erfindung ausgestattet, so ist eine besonders gute Schallabsorption gegebenenfalls am Ort der Schallentwicklung erreichbar.

Bekanntermaßen beeinflusst der Wandabstand zwischen den Folienabsorbern untereinander das Schallabsorptionsvermögen. In einer bevorzugten Ausführungsform der vorliegenden Erfindung ist der Abstand der mikrogelochten Folienabsorber bei Anwesenheit von mehr als 2 mikrogelochten Folienabsorbern untereinander konstant. Hierbei handelt es sich somit um parallele, gegebenenfalls planparallele Schichten. Da im Fahrzeugbau eine Planparallelität in der Regel nicht gewünscht ist, besteht eine weitere bevorzugte Ausführungsform der vorliegenden Erfindung darin, dass der Abstand der mikrogelochten Folienabsorber bei Anwesenheit von mehr als 2 mikrogelochten Folienabsorbern untereinander verschieden ist. Hierunter ist weiter zu verstehen, dass beispielsweise gekrümmte, konvexe oder konkave Schichten mit unterschiedlichen Krümmungsradien einander gegenüberstehen.

Im Sinne der vorliegenden Erfindung ist es nicht zwingend erforderlich, dass der Zwischenraum zwischen den jeweiligen mikrogelochten Folienabsorbern untereinander mit einem Dämpfungsmaterial ausgefüllt ist. Für den Fall der Anwesenheit eines Dämpfungsmaterials ist dieses besonders bevorzugt ausgewählt aus offenporigem Schaumstoff, insbesondere aus Kunststoff oder Metall sowie aus Vlies. Hierbei ist es möglich, den oder die Abstände der mikrogelochten Folienabsorber untereinander jeweils teilweise oder vollständig mit dem gewünschten Material auszufüllen.

Mit Hilfe der vorliegenden Erfindung ist es somit möglich, Verkleidungs- oder Formelemente für Fahrzeuge, insbesondere Kraftfahrzeuge, beispielsweise Personenkraftfahrwagen, Lastkraftwagen, Busse, Motorräder, schienengebundene Fahrzeuge, insbesondere Lokomotiven, Waggons, und Straßenbahnen sowie für Schiffe und Flugzeuge zur Verfügung zu stellen.

## Patentansprüche

1. Verkleidungs- oder Formelement für Verkehrsmittel umfassend wenigstens einen mikrogelochten Folienabsorber mit einem Lochflächenanteil von 0,2 bis 4 %, wobei die Löcher des mikrogelochten Folienabsorbers für die Mikroperforierung einen oder mehrere Durchmesser im Bereich von 0,05 bis 2 mm und einen oder mehrere Lochabstände im Bereich von 1 bis 20 mm aufweisen und wenigstens einen Schaumstoff- und/oder Vliesabsorber in räumlichem Abstand zu einer schallharten Wand aufweisen.

2. Verkleidungs- oder Formelement nach Anspruch 1, **dadurch gekennzeichnet, dass** es Radhäuser, Motorhauben, Motorhaubenverkleidungen, Motorverkapselungen, Wärmeleitbleche, Fahrzeugschutzschilde, Getriebetunnelverkleidungen, Armaturenbretter, Fahrzeugsitze, Rückenlehnen, Armlehnen, Lenkräder, Bodenbeläge, insbesondere Teppichböden, Dachhimmel, Säulenverkleidungen, Türverkleidungen, Fahrgastraumauskleidungen, Gepäckablagen, Hutablagen, Hitzeschitder und/oder Kofferraumauskleidungen umfasst.

3. Verkleidungs- oder Formelement nach Anspruch 1, **dadurch gekennzeichnet, dass** der mikrogelochte Folienabsorber einen Lochflächenanteil von 0,3 bis 2 %, bezogen auf die Fläche des Absorbers, aufweist.

4. Verkleidungs- oder Formelement nach Anspruch 1, **dadurch gekennzeichnet, dass** die Löcher des mikrogelochten Folienabsorbers für die Mikroperforierung einen oder mehrere Durchmesser im Bereich von 0,1 mm bis 0,8 mm und einen oder mehrere Lochabstände im Bereich von 1 mm bis 3 mm aufweisen.

5. Verkleidungs- oder Formelement nach Anspruch 1, **dadurch gekennzeichnet, dass** es mehrere mikrogelochte Folienabsorber, insbesondere jeweils mit unterschiedlichem Lochdurchmesser pro mikrogelochtem Folienabsorber und jeweils unterschiedlichem Lochabstand pro mikrogelochtem Folienabsorber aufweist.

6. Verkleidungs- oder Formelement nach einem oder mehreren der Ansprüche 1 bis 5, **dadurch gekennzeichnet, dass** der mikrogelochte Folienabsorber einen Lochflächenanteil mit Makrolochung von 2 bis 20 %, bezogen auf die Fläche des Absorbers, aufweist.

7. Verkleidungs- oder Formelement nach einem oder mehrerer der Ansprüche 1 bis 6, **dadurch gekennzeichnet, dass** die zusammenhängende Fläche für eine Makrolochung 6 mm² bis 40000² beträgt.

8. Verkleidungs- oder Formelement nach einem oder mehreren der Ansprüche 1 bis 7, **dadurch gekennzeichnet, dass** sich die Löcher für die Mikroperforierung homogen über die Fläche des Absorbers verteilt sind, oder mit gleichem Lochdurchmesser und gleicher offener Fläche an einer oder mehreren Stellen des Absorbers konzentrieren.

9. Verkleidungs- oder Formelement nach Anspruch 1, **dadurch gekennzeichnet, dass** die Schichtdicke eines mikrogelochten Folienabsorbers 0,2 mm bis 5 mm, insbesondere 0,2 mm bis 2 mm beträgt.

10. Verkleidungs- oder Formelement nach Anspruch 1, **dadurch gekennzeichnet, dass** das Material des mikrogelochten Folienabsorbers Kunststoffe, Leder, Kork, Holz, Gummi, Textilien, Glas und/oder Metalle umfasst.

11. Verkleidungs- oder Formelement nach Anspruch 1, **dadurch gekennzeichnet, dass** das Element mehrlagig aus dem gleichen Material besteht oder die einzelnen Schichten aus unterschiedlichen Materialien bestehen.

12. Verkleidungs- oder Formelement nach Anspruch 1, **dadurch gekennzeichnet, dass** der Abstand der mikrogelochten Folienabsorber im Falle der Anwesenheit von wenigstens 3 mikrogelochten Folienabsorbern untereinander konstant ist.

13. Verkleidungs- oder Formelement nach Anspruch 1, **dadurch gekennzeichnet, dass** der Abstand der mikrogelochten Folienabsorber im Falle der Anwesenheit von wenigstens 3 mikrogelochten Folienabsorbern untereinander verschieden ist

14. Verkleidungs- oder Formelement nach Anspruch 1, **dadurch gekennzeichnet, dass** die Materialdicke, der Lochabstand und die Lochdurchmesser über das Element variieren.

15. Verkleidungs- oder Formelement nach einem oder mehrerer der Ansprüche 1 bis 14, **dadurch gekennzeichnet, dass** die Verkehrsmittel Kraftfahrzeuge, insbesondere Personenkraftwagen, Lastkraftwagen, Busse, Motorräder, schienengebundene Fahrzeuge, insbesondere Lokomotiven, Waggons, und Straßenbahnen, Schiffe und Flugzeuge umfassen.

## Claims

1. A lining or shape element for means of transportation, comprising at least one microperforated sheet absorber having a proportion of hole area of from 0.2 to 4%, wherein the holes of said microperforated sheet absorber for the microperforation have one or more diameters within a range of from 0.05 mm to 2 mm and one or more interhole distances within a range of from 1 mm to 20 mm, and at least one foam and/or non-woven absorber at a spatial distance from a reverberant wall.

2. The lining or shape element according to claim 1, **characterized by** comprising wheel housings, hoods, hood linings, engine encapsulations, heat transfer plates, vehicle shields, transmission tunnel linings, dashboards, vehicle seats, seat backs, armrests, steering wheels, carpetings, especially carpets, roof linings, pillar linings, door linings, passenger compartment linings, luggage shelves, rear shelves, heat shields and/or trunk linings.

3. The lining or shape element according to claim 1, **characterized in that** said microperforated sheet absorber has a proportion of hole area of from 0.3 to 2%, based on the surface area of the absorber.

4. The lining or shape element according to claim 1, **characterized in that** the holes of said microperforated sheet absorber for the microperforation have one or more diameters within a range of from 0.1 mm to 0.8 mm and one or more interhole distances within a range of from 1 mm to 3 mm.

5. The lining or shape element according to claim 1, **characterized by** including several microperforated sheet absorbers, especially having respectively different hole diameters per microperforated sheet absorber and respectively different interhole distances per microperforated sheet absorber.

6. The lining or shape element according to one or more of claims 1 to 5, **characterized in that** said microperforated sheet absorber has a proportion of hole area macroperforation of from 2 to 20%, based on the surface area of the absorber.

7. The lining or shape element according to one or more of claims 1 to 6, **characterized in that** the contiguous surface area for a macroperforation is from 6 mm² to 40,000 mm².

8. The lining or shape element according to one or more of claims 1 to 7, **characterized in that** the holes for the microperforation are homogeneously distributed over the surface of the absorber, or are concentrated on one or several places of the absorber with the same hole diameters and the same open surface area.

9. The lining or shape element according to claim 1, **characterized in that** the layer thickness of a microperforated sheet absorber is from 0.2 mm to 5 mm, especially from 0.2 mm to 2 mm.

10. The lining or shape element according to claim 1, **characterized in that** the material of said microperforated sheet absorber comprises plastics, leather, cork, wood, rubber, textiles, glass and/or metals.

11. The lining or shape element according to claim 1, **characterized in that** said element is multilayered, wherein the layers consist of the same material or the individual layers consist of different materials.

12. The lining or shape element according to claim 1, **characterized in that** the mutual distance of the microperforated sheet absorbers is constant in the case where at least 3 microperforated sheet absorbers are present.

13. The lining or shape element according to claim 1, **characterized in that** the mutual distance of the microperforated sheet absorbers is different in the case where at least 3 microperforated sheet absorbers are present.

14. The lining or shape element according to claim 1, **characterized in that** the thickness of the material, the interhole distance and the hole diameters vary over the element.

15. The lining or shape element according to one or more of claims 1 to 14, **characterized in that** said means of transportation comprise motor vehicles, especially passenger cars, trucks, busses, motor bikes, track-bound vehicles, especially locomotive engines, waggons and streetcars, vessels and airplanes.

## Revendications

1. Elément de revêtement ou de forme pour des moyens de transport, comprenant au moins un absorbeur en feuille microperforée avec un taux superficiel de perforation de 0,2 à 4 %, les trous de la microperforation de cette feuille présentant un ou plusieurs diamètres dans la plage de 0,05 à 2 mm et un ou plusieurs intervalles entre les trous dans la plage de 1 à 20 mm, au moins un absorbeur en mousse et/ou en non tissé étant espacé par rapport à une paroi réverbérant le son.

2. Elément de revêtement ou de forme selon la revendication 1, **caractérisé en ce que** il concerne des logements de roue, des capots de moteur, des revêtements de capot de moteur, des capsulages de moteur, des tôles conductrices de la chaleur, des boucliers de protection de véhicule, des revêtements de tunnel de transmission, des tableaux de bord, des assises, des dossiers, des bras de siège de véhicule, des volants, des revêtements de sol, en particulier des tapis de sol, des ciels de toit, des revêtements de pieds-droits, des revêtements de porte, des revêtements d'intérieur de véhicule, des emplacements de bagages, des emplacements à chapeaux, des boucliers thermiques et/ou des revêtements de coffre de véhicule.

3. Elément de revêtement ou de forme selon la revendication 1, **caractérisé en ce que** l'absorbeur en feuille microperforée présente un taux superficiel de perforation de 0,3 à 2 % par rapport à la surface de l'absorbeur.

4. Elément de revêtement ou de forme selon la revendication 1, **caractérisé en ce que** les trous de l'absorbeur en feuille microperforée présentent pour la microperforation un ou plusieurs diamètres dans la plage de 0,1 à 0,8 mm et un ou plusieurs intervalles entre trous dans la plage de 1 à 3 mm.

5. Elément de revêtement ou de forme selon la revendication 1, **caractérisé en ce qu'**il présente plusieurs absorbeurs en feuilles microperforée, en particulier avec pour chaque absorbeur des diamètres de trou différents ainsi que des intervalles entre trous différents

6. Elément de revêtement ou de forme selon une des revendications 1 à 5, **caractérisé en ce que** l'absorbeur en feuille microperforée présente un taux superficiel de perforation avec une macroperforation de 2 à 20 % par rapport à la surface de l'absorbeur.

7. Elément de revêtement ou de forme selon une des revendications 1 à 6, **caractérisé en ce que** la surface continue pour une macroperforation est de 6 à 40 000 mm2

8. Elément de revêtement ou de forme selon une ou plusieurs des revendications 1 à 7, **caractérisé en ce que** les trous de la microperforation sont répartis de manière homogène à la surface de l'absorbeur, où sont concentrés avec le même diamètre de trou et la même surface ouverte en un ou plusieurs endroits de l'absorbeur.

9. Elément de revêtement ou de forme selon la revendication 1, **caractérisé en ce que** l'épaisseur de la couche constituant un absorbeur en feuille microperforée est de 0,2 à 5 mm, notamment de 0,2 à 2 mm.

10. Elément de revêtement ou de forme selon la revendication 1, **caractérisé en ce que** le matériau constituant l'absorbeur en feuille microperforée est une matière plastique, du cuir, du liège, du bois, du catoutchouc, un textile, du verre et/ou un métal.

11. Elément de revêtement ou de forme selon la revendication 1, **caractérisé en ce que** l'élément est constitué de plusieurs couches du même matériau, ou de couches individuelles faites de matériaux différents.

12. Elément de revêtement ou de forme selon la revendication 1, **caractérisé en ce que** la distance entre les absorbeurs en feuille microperforée, quand ils sont au moins trois, est constante.

13. Elément de revêtement ou de forme selon la revendication 1, **caractérisé en ce que** les distances entre les absorbeurs en feuille microperforée, quand ils sont au moins trois, sont différentes.

14. Elément de revêtement ou de forme selon la revendication 1, **caractérisé en ce que** l'épaisseur du matériau, l'intervalle entre trous et le diamètre des trous varient sur l'élément.

15. Elément de revêtement ou de forme selon une des revendications 1 à 14, **caractérisé en ce que** les moyens de transport comprennent des véhicules automobile, en particulier des véhicules de tourisme, des véhicules utilitaires, des autobus, des motocyclettes, des véhicules sur rail, notamment des locomotives, des wagons et des tramways, des bateaux et des avions.
